# EUROPÄISCHE PATENTSCHRIFT

(11) **EP 1 539 453 B1**
(45) Veröffentlichungstag und Bekanntmachung des Hinweises auf die Patenterteilung: **22.09.2010**
(21) Anmeldenummer: 03807814.3
(22) Anmeldetag: 26.08.2003
(51) Int. Cl.: B29C 44/34, B29C 44/46, B29C 67/24, B29B 7/74

(54) **VERFAHREN ZUR HERSTELLUNG VON LUNKER- UND PINHOLEFREIEM POLYURETHAN-BLOCKSCHAUM**
METHOD FOR PRODUCING CAVITY-FREE AND PINHOLE-FREE POLYURETHANE SLABSTOCK FOAM
PROCEDE DE PRODUCTION DE MOUSSE POLYURETHANE EXEMPTE DE POCHES ET DE TROUS D'EPINGLE

(30) Priorität: 11.09.2002 DE 10242101
(43) Veröffentlichungstag der Anmeldung: 15.06.2005
(73) Patentinhaber: Hennecke GmbH, 51379 Leverkusen (DE)
(72) Erfinder: RAFFEL, Reiner, 53721 Siegburg (DE); WIRTH, Jürgen, 51147 Köln (DE); PAWLIK, Wolfgang, 50735 Köln (DE); SCHAMBERG, Martin, 53757 Sankt Augustin (DE)
(74) Vertreter: Gosdin, Michael
(86) Internationale Anmeldenummer: PCT/EP2003/009627
(87) Internationale Veröffentlichungsnummer: WO 2004/033178

(56) Entgegenhaltungen:
- EP-A- 0 719 627
- WO-A-01/10623
- WO-A-01/98389
- US-A- 3 220 801
- US-A- 5 472 990
- US-A- 5 840 778
- US-A- 5 883 143
- US-A- 6 005 014
- KLAHRE H ET AL: "PUR-SCHAUMSTOFFE MIT HOMOGENER ZELLSTRUKTUR. PUR FOAMS WITH UNIFORMCELL STRUCTURE" KUNSTSTOFFE, CARL HANSER VERLAG. MUNCHEN, DE, Bd. 87, Nr. 6, 1. Juni 1997 (1997-06-01), Seiten 722-723,726, XP000656860 ISSN: 0023-5563

## Beschreibung

Die Erfindung betrifft ein Verfahren zur kontinuierlichen Herstellung von Polyurethanschaum, insbesondere Polyurethan-Blockschaum, in Gegenwart von Wasser als Treibmittel, bei dem die Verfahrensschritte Mischen und Nukleieren, das heißt die Erzeugung von Blasenkeimen, getrennt voneinander durchgeführt werden.

WO-A-01/98389 offenbart ein Verfahren und eine Vorrichtung zur Herstellung von Polyurethan-Schaum unter Einsatz von CO₂ als Treibmittel, bei dem das Polyurethan-Reaktionsgemisch direkt im Anschluss an die Vermischung in der Mischkammer durch ein Druckhalteorgan geführt wird, das aus zwei in Strömungsrichtung hintereinander angeordneten Sieben besteht.

US-A-5,840,778 offenbart ein Verfahren und eine Vorrichtung zur Herstellung von Polyurethan-Schaum unter Einsatz von CO₂ als Treibmittel, bei dem das Polyurethan-Reaktionsgemisch im Anschluss an die Vermischung durch eine mindestens 1mm lang in Strömungsrichtung ausgedehnte Öffnung geführt und dabei geschert wird und das Polyurethan-Reaktionsgemisch anschließend durch ein Sieb geführt wird.

EP-A-719 627 offenbart ein Verfahren und eine Vorrichtung zur Herstellung von Polyurethan-Schaum unter Einsatz von CO₂ als Treibmittel, bei dem das Polyurethan-Reaktionsgemisch im Anschluss an die Vermischung durch einen Strömungskanal geführt und dabei geschert wird. Das aus dem Strömungskanal austretende Polyurethan-Reaktionsgemisch durchläuft anschließend ein Mittel zur Reduktion der Geschwindigkeit, z.B. ein Prallfläche oder Siebe.

US-A-3,220,801 offenbart ein Verfahren und eine Vorrichtung zur Herstellung von Polyurethan-Schaum, bei dem das Polyurethan-Reaktionsgemisch im Anschluss an die Vermischung in der Mischkammer direkt ein Druckhalteventil mit laminarer Strömung durchläuft. Eine Verdüsung des Polyurethan-Reaktionsgemisches zwischen Mischkammer und verstellbarem Drosselorgan ist gemäß der Lehre von US-A-3,220,801 nicht vorgesehen.

Das Verfahren zur Herstellung von Polyurethanschaum in Gegenwart von Wasser als chemischem Treibmittel ist beispielsweise in EP-A1-565 974 beschrieben. Bei diesem Verfahren werden die Reaktionspartner Polyol und Isocyanat sowie Wasser und gegebenenfalls weitere Additive kontinuierlich dosiert einer Mischkammer zugeführt und dort mit einem Rührwerksmischer vermischt. Anschließend wird das Gemisch ausgetragen. Bei der Reaktion von Isocyanat und Wasser entsteht Kohlendioxid, das als Treibgas dient und die Aufschäumung des Polyurethans bewirkt.

Der Rührer hat dabei einerseits die Aufgabe, die Komponenten miteinander zu vermischen; andererseits hat er die zusätzliche Aufgabe, die in den Komponenten in geringen Mengen an als Blasenkeimbildner gelöstem Gas wie Luft oder Stickstoff als feinste Gasbläschen in der Mischkammer freizusetzen, die dann als Blasenkeime fungieren.

Abhängig von den gelösten Gasanteilen an Blasenkeimbildner in den Komponenten und abhängig vom Druck in der Mischkammer werden an den Rührelementen durch Scherkräfte und Kavitation die gelösten Gasanteile freigesetzt und bilden so die Keimzellen für das im Laufe der Reaktion chemisch erzeugte CO₂-Treibgas. Aufgrund der über den Radius sehr unterschiedlichen Umfangsgeschwindigkeiten geschieht dies jedoch sehr unkontrolliert und unplanmäßig, so dass ein sehr inhomogenes Spektrum an Bläschen entsteht.

Zur Steuerung der Anzahl der Zellen im erzeugten Polyurethanschaum ist es auch möglich, in den Komponenten, vorzugsweise in der Polyol- und/oder der Isocyanatkomponente, zusätzlich größere Mengen ans physikalisch gelöstem Treibgas wie niedrigsiedenden Flüssigkeiten oder CO₂ zu lösen. Insbesondere bei hohen Beladungen mit physikalisch gelöstem Treibgas führt dies aber dazu, dass das Gemisch beim Austrag häufig mit vielen groben Blasen durchsetzt ist, die später zu Lunkern im Schaum oder aber zu Schlieren und Strukturen führen.

Ein weiteres Problem besteht darin, dass sich an der Rührerwelle eine Gasphase separieren kann, da die Gasblasen aufgrund ihrer geringeren Dichte durch das Zentrifugalkraftfeld nach innen an die Rührerwelle wandern. Aus dieser Gasphase können dann durch die Strömung des Polyurethan-Reaktionsgemisches einzelne größere Blasen mitgerissen werden, die ebenfalls zu Lunkern oder Pinholes, das heißt Fehlstellen, im Schaum führen.

Die Zentrifugalkraft in der Mischkammer bedingt darüber hinaus noch ein weiteres Problem. Abhängig von der Art des Rührers und der Rührerdrehzahl ist der Druck außen in der Mischkammer deutlich höher als innen. Das Druckniveau ist aber ein wesentlicher Parameter für die Freisetzung von Blasenkeimen. Eine gezielte Nukleierung, das heißt eine gezielte Freisetzung von Blasenkeimen, wird durch diesen Effekt deutlich erschwert. Außerdem kann der Rührer bei diesem Verfahren nicht einfach hinsichtlich der Vermischung der Komponenten optimiert werden, da die optimierte Vermischung zu einer ungezielten Erzeugung von Blasenkeimen führen kann.

Ein weiteres Problem tritt auf bei dem Versuch, durch zusätzliche Beladung einer Komponente mit einem Blasenkeimbildner wie Luft oder Stickstoff die Anzahl der Zellen gezielt zu steuern. Es ist zwar grundsätzlich möglich, bei gegebenem Mischkammerdruck durch Lösen von als Blasenkeimbildner wirkendem Gas in einer der Reaktionskomponenten die Anzahl der Zellen zu erhöhen. Gleichzeitig entstehen dabei jedoch auch Pinholes und Lunker im erzeugten Schaum. Eine Erhöhung des Mischkammerdruckes beseitigt zwar diesen Effekt, führt jedoch zu gröberen Zellen im erzeugten Polyurethanschaum. Fehlerfreie feine Zellen können nur bei geringen Beladungen mit gelöstem Blasenkeimbildner und niedrigen Mischkammerdrücken erzielt werden. Die erzielbaren Mischkammerdrücke sind jedoch wieder von der Art des Rührers, der Viskosität der Mischung, dem Durchsatz und der Rührerdrehzahl abhängig.

Die Aufgabe der vorliegenden Erfindung besteht daher darin, diese gegenseitigen Abhängigkeiten aufzulösen und eine gute Vermischung der Reaktionskomponenten und ebenfalls eine gezielte Erzeugung von Blasenkeimen zu ermöglichen. Zur Lösung der Aufgabe werden die Verfahrensschritte Mischen und Nukleieren räumlich voneinander getrennt, wobei zuerst die Komponenten miteinander vermischt werden und anschließend im Polyurethan-Reaktionsgemisch Blasenkeime erzeugt werden. Die Steuerung der Anzahl der erzeugten Blasenkeime erfolgt durch Einstellung des Drucks.

Die Erfindung betrifft ein Verfahren zur kontinuierlichen Herstellung von Polyurethanschaum aus mindestens einer Polyolkomponente und mindestens einer Isocyanatkomponente in Gegenwart von Wasser als Treibmittel und gegebenenfalls weiteren Additiven, bei dem man
a) die Polyolkomponente, die Isocyanatkomponente, das Wasser und gegebenenfalls die weiteren Additive in die Mischkammer eines Mischaggregats dosierend fördert und dort bei Drücken von 3 bis 200 bar zu einem Polyurethan-Reaktionsgemisch vermischt und anschließend
b) das Polyurethan-Reaktionsgemisch in einem Druckabbau-Organ mit Drücken von 3 bis 200 bar verdüst und dabei Blasenkeime erzeugt, wobei man den Druck in Strömungsrichtung hinter dem Druckabbau-Organ durch ein Drosselorgan einstellt und so die Anzahl der erzeugten Blasenkeimen steuert und anschließend
c) das Blasenkeime enthaltende Polyurethan-Reaktionsgemisch durch das Drosselorgan ausströmen lässt und auf ein Substrat aufbringt, auf dem es aufschäumt und aushärtet,
   wobei das Mischaggregat ein Statikmischer ist.

Dabei können das Wasser und gegebenenfalls die Additive als separate Ströme in die Mischkammer gefördert werden oder ganz oder teilweise zunächst in mindestens eine der Polyol- und/oder Isocyanatkomponente eingebracht und damit vermischt werden und anschließend gemeinsam mit dieser mindestens einen Polyol- und/oder Isocyanatkomponente in die Mischkammer gefördert werden.

Als Isocyanatkomponente sind die in der Polyurethan-Chemie gängigen Di- und/oder Polyisocyanate wie beispielsweise Toluylendiisocyanat (TDI) oder Isocyanate der Diphenylmethanreihe (MDI) geeignet.

Als Polyolkomponente sind die in der Polyurethan-Chemie gängigen Polyole mit gegenüber Isocyanatgruppen reaktiven Wasserstoffatomen geeignet wie Polyether, Polyester oder Polyamine.

Als Additive können die in der Polyurethan-Chemie gängigen Hilfs- und Zusatzstoffe wie beispielsweise Katalysatoren, Emulgatoren, Stabilisatoren, Reaktionsverzögerer, Pigmente, Farbstoffe, Flammschutzmittel, zusätzliche Treibmittel oder Füllstoffe eingesetzt werden.

Als Substrat, auf dem das Polyurethan-Reaktionsgemisch aufschäumt und aushärtet, können beispielsweise Förderbänder, die mit Deckschichten versehen sein können, oder Formen oder alle anderen gängigen Schäumunterlagen eingesetzt werden.

Die unkontrollierte Erzeugung von Blasenkeimen in der Mischkammer kann dadurch verhindert werden, dass die Vermischung bei so hohen Drücken durchgeführt wird, bei denen auch Unterdruckzonen und lokale Schergradienten nicht dazu führen können, dass das als Blasenkeimbildner in den Komponenten gelöste Gas wie Luft oder Stickstoff und das durch die chemische Reaktion zwischen Isocyanat und Wasser entstandene CO₂ in der Mischkammer freigesetzt wird. Die Drücke in der Mischkammer liegen zwischen 3 und 200 bar, bevorzugt zwischen 5 und 200 bar und besonders bevorzugt zwischen 10 und 100 bar.

Bei der anschließenden Verdüsung des Polyurethan-Reaktionsgemisches lässt sich im Vergleich zur Nukleierung durch Rührer ein besonders enges Blasenspektrum mit extrem feinen Blasenkeimen erzeugen. Dazu erfolgt die Verdüsung bei Drücken von 3 bis 200 bar, bevorzugt bei Drücken von 5 bis 200 bar und besonders bevorzugt bei Drücken von 10 bis 100 bar.

Vorzugsweise wird vor der Vermischung der Komponenten in der Mischkammer in einer oder mehreren der Komponenten, beispielsweise in der Polyol- und/oder Isocyanatkomponente, ein Blasenkeimbildner gelöst. Üblicherweise sind die Blasenkeimbildner Luft oder Stickstoff. Die anschließende Vermischung in der Mischkammer erfolgt bei solchen Drücken, die oberhalb des Lösungsdrucks der in dem Gemisch oder den Komponenten gelösten Gasanteile liegen, so dass in der Mischkammer kein Blasenkeimbildner und kein durch die chemische Reaktion zwischen Isocyanat und Wasser entstandenes CO₂ freigesetzt wird.

Der Blasenkeimbildner kann aber auch in die Mischkammer injiziert und dort gelöst werden. Vorzugsweise wird der in die Mischkammer injizierte Blasenkeimbildner dort vollständig gelöst.

Häufig sind jedoch die in der Polyol- und/oder Isocyanatkomponente während der Lagerung gelösten Mengen an Luft oder Stickstoff für die Bildung von Blasenkeimen bereits ausreichend.

In Strömungsrichtung hinter der Mischkammer wird der Druck durch geeignete Druckabbau-Organe entspannt, so dass eine gezielte Blasenkeimbildung erfolgt. Wichtig dafür ist einerseits das Vorhandensein von genügend hohen Schergeschwindigkeiten und von Scherkanten sowie andererseits eine Entspannung auf ein Druckniveau unterhalb des Lösungsdruckes der gelösten Gasanteile im Reaktionsgemisch. Vorzugsweise erfolgt die Entspannung schlagartig.

Als Druckabbau-Organe für die Verdüsung und die Erzeugung von Blasenkeimen sind insbesondere eine oder mehrere Düsen oder Düsenfelder geeignet. Unter einem Düsenfeld werden dabei mehrere düsen- oder blendenartige Öffnungen verstanden, die nebeneinander angeordnet sein können und parallel durchströmt werden. Ebenfalls geeignet sind beispielsweise Blenden, Siebe oder Lochplatten. In bevorzugter Ausführungsform sind diese Öffnungen und damit die Geschwindigkeiten, mit denen diese Öffnungen durchströmt werden, einstellbar. Dies ist z.B. durch Zapfendüsen oder durch zueinander verschieb- oder verdrehbare Lochplatten zu erreichen. Dadurch kann die Anzahl der erzeugten Gaskeime gesteuert bzw. geregelt werden.

Der Druck in Strömungsrichtung hinter dem Druckabbau-Organ wird mit einem verstellbaren Drosselorgan eingestellt. Hierdurch ist die Anzahl der erzeugten Gaskeime steuerbar. Das Druckniveau zwischen Druckabbau-Organ und Drosselorgan liegt in Abhängigkeit von der Art und der Menge des als Keimbildner eingesetzten Gases in einem Bereich von höchstens 20 bar, bevorzugt in einem Bereich von 0,1 bis 20 bar, besonders bevorzugt in einem Bereich von 0,1 bis 10 bar und ganz besonders bevorzugt in einem Bereich zwischen 0,2 bis 5 bar.

Als Drosselorgane können Drosselventile oder andere geeignete verstellbare Drosseleinrichtungen eingesetzt werden. Bevorzugt werden Membranventile oder Quetschventile eingesetzt.

Vorteilhaft an der Entkopplung der Verfahrensschritte Mischen und Nukleieren ist auch, dass als Mischaggregat Statikmischer eingesetzt werden. Da ein Statikmischer eine gute Vermischung nur bei einer ausreichenden Druckdifferenz erzielen kann, ist eine gezielte Erzeugung von Blasenkeimen bei Einsatz eines Statikmischers ohne eine Entkopplung der Verfahrensschritte Mischen und Nukleieren nicht möglich. Denn ein Statikmischer erzeugt weder ausreichende Unterdruck- und Kavitationszonen noch ausreichende Schergradienten im Gemisch, um eine genügend feine Nukleierung erzielen zu können. Die allmähliche Entspannung im Statikmischer und die verhältnismäßig niedrigen Scherkräfte in der Strömung durch den Statikmischer führen lediglich zu einer relativ geringen Blasenanzahl und zu einem sehr inhomogenen Blasenspektrum.

Wenn jedoch dem Statikmischer ein geeignetes Druckabbau-Organ nachgeschaltet ist, kann das Druckniveau im Statikmischer, insbesondere auch am Austritt des Statikmischers, so hoch gehalten werden, dass keinerlei Gas freigesetzt wird. Dadurch kann der Statikmischer hinsichtlich der Vermischung optimiert werden, ohne dass die Erzeugung der Blasenkeime negativ beeinflusst wird.

Zweckmäßig eingesetzt wird eine Vorrichtung zur kontinuierlichen Herstellung von Polyurethanschaum, enthaltend ein Mischaggragat mit einer Mischkammer und Zuleitungen für die Reaktionskomponenten und einer Auslassöffnung für das Polyurethan-Reaktionsgemisch, **dadurch gekennzeichnet, dass** an die Auslauföffnung ein Druckabbau-Organ anschließt und in Strömungsrichtung hinter dem Druckabbau-Organ ein verstellbares Drosselorgan angeordnet ist, und dass das Mischaggregat ein Statikmischer ist.

Als Druckabbau-Organe sind insbesondere ein oder mehrere Düsen oder Düsenfelder sowie Blenden, Siebe oder Lochplatten geeignet.

Als Drosselorgane können Drosselventile oder andere geeignete verstellbare Drosseleinrichtungen eingesetzt werden. Bevorzugt werden Membranventile oder Quetschventile eingesetzt.

## Patentansprüche

1. Verfahren zur kontinnierlichen Herstellung von Polyurethanschaum aus mindestens einer Polyolkomponente und mindestens einer Isocyanatkomponente in Gegenwart von Wasser als Treibmittel and gegebenenfalls weiteren Additiven, bei dem man
a) die Polyolkomponente, die Isocyanatkomponente, das Wasser und gegebenenfalls die weiteren Additive in die Mischkammer eines Mischaggregats dosierend fordert und dort bei Drücken von 3 bis 200 bar zu einem Polyurethan-Reaktionsgemisch vermischt und anschließend
b) das Polyurethan-Reaktionsgemisch in einem Druckabbau-Organ mit Drücken von 3 bis 200 bar verdüst und dabei Blasenkeime erzengt, wobei man den Druck in Strömungsrichtung hinter dem Druckabbau-Organ durch ein Drosselorgan einstellt und so die Anzahl der erzeugten Blasenkeimen steuert und anschließend
c) das Blasenkeime enthaltende Polyurethan-Reaktionsgemisch durch das Drosselorgan ausströmen lässt und auf ein Substrat aufbringt, auf dem es aufschäumt und aushärtet,
**dadurch gekennzeichnet, dass** das Mischaggregat ein Statikmischer ist.

2. Verfahren nach Anspruch 1, bei dem man die Polyolkomponente, die Isocyanatkomponente, das Wasser und die gegebenenfalls weiteren Additive bei Drücken von 5 bis 200 bar vermischt und anschließend das Poly-Reaktionsgemisch in Schritt b) mit Drücken von 5 bis 200 bar verdüst.

3. Verfahren nach einem der Absprüche 1 bis 2, bei dem man als Druckabbau-Organ eine oder mehrere Düsen oder Blenden einsetzt.

4. Verfahren nach Anspruch 3, bei dem man Düsen oder Blenden einsetzt, bei denen die Querschnittsfläche der Öffnungen verstellbar ist

5. Verfahren nach einem der Ansprüche 1 bis 4, bei dem man als Drosselorgan ein Membran- oder Quetschventil einsetzt

6. Verfahren nach einem der Ansprüche 1 bis 5, **dadurch gekennzeichnet, dass** der Druck zwischen dem Druckabbau-Organ und dem Drosselorgan höchstens 20 bar beträgt.

7. Verfahren nach Anspruch 1, bei dem man vor der Vermischung in der Mischkammer in der Polyol- und/oder der Isocyanatkomponente einen Blasenkeimbildner löst.

8. Verfahren nach Anspruch 1, bei dem man einen Blasenkeimbildner in die Mischkammer injiziert und dort in Lösung bringt.

## Claims

1. Process for the continuous production of polyurethane foam from at least one polyol component and at least one isocyanate component in the presence of water as a blowing agent and optionally further additives, in which
a) the polyol component, the isocyanate component, the water and optionally the further additives are conveyed in metered manner into the mixing chamber of a mixing unit and are there mixed at pressures of from 3 to 200 bar to form a polyurethane reaction mixture, and then
b) the polyurethane reaction mixture is atomised in a pressure-reduction body with pressures of from 3 to 200 bar, and bubble nuclei are here generated, wherein the pressure is adjusted in the direction of flow downstream of the pressure-reduction body by a throttle body, and the number of bubble nuclei which are generated is regulated thus, and then
c) the polyurethane reaction mixture which comprises bubble nuclei is caused to flow out through the throttle body and is applied to a substrate on which it foams and cures,
**characterized in that**
the mixing unit is a static mixing element.

2. Process according to Claim 1, in which the polyol component, the isocyanate component, the water and optionally the further additives are mixed at pressures of from 5 to 200 bar and subsequently the polyurethane reaction mixture in step b) is atomized at pressures of from 5 to 200 bar.

3. Process according to one of Claims 1 to 2, in which one or more nozzles or orifices are utilised as a pressure-reduction body.

4. Process according to Claim 3, in which nozzles or orifices are utilised, in which the cross-sectional area of the openings is adjustable.

5. Process according to one of Claims 1 to 4, in which a diaphragm valve or pinch valve is utilised as a throttle body.

6. Process according to one of Claims 1 to 5, **characterised in that** the pressure between the pressure-reduction body and the throttle body is maximal 20 bar.

7. Process according to Claim 1, in which a bubble nucleating agent is dissolved in the polyol component and/or the isocyanate component in the mixing chamber before the mixing.

8. Process according to Claim 1, in which a bubble nucleating agent is injected into the mixing chamber and is dissolved there.

## Revendications

1. Procédé pour la production continue de mousse de polyuréthanne à partir d'au moins un composant polyol et d'au moins un composant isocyanate en présence d'eau en tant qu'agent d'expansion et éventuellement d'autres additifs, dans lequel
a) on introduit par addition dosée dans une chambre de mélange d'un appareil de mélange le composant polyol, le composant isocyanate, l'eau et éventuellement les autres additifs et on les y mélange sous des pressions de 3 à 200 bars pour l'obtention d'un mélange réactionnel de polyuréthanne et ensuite
b) on atomise le mélange réactionnel de polyuréthanne dans un organe de diminution de pression, avec des pressions de 3 à 200 bars et on engendre ainsi des germes de bulles, en réglant la pression au moyen d'un organe d'étranglement dans le sens du flux, après l'organe de diminution de pression, et en réglant ainsi le nombre des germes de bulles engendrés et ensuite
c) on fait sortir par l'organe d'étranglement le mélange réactionnel de polyuréthanne contenant des germes de bulles et on l'applique sur un support, sur lequel il se transforme en mousse et durcit, **caractérisé en ce que** l'appareil de mélange est un mélangeur statique.

2. Procédé selon la revendication 1, dans lequel on mélange le composant polyol, le composant isocyanate, l'eau et les éventuels autres additifs sous des pressions de 5 à 200 bars et ensuite dans l'étape b) on atomise le mélange réactionnel de polyuréthanne avec des pressions de 5 à 200 bars.

3. Procédé selon la revendication 1 ou 2, dans lequel on utilise comme organe de diminution de pression une ou plusieurs buses ou un ou plusieurs diaphragmes.

4. Procédé selon la revendication 3, dans lequel on utilise des buses ou des diaphragmes, dans lesquels la surface de la section transversale des ouvertures est ajustable.

5. Procédé selon l'une quelconque des revendications 1 à 4, dans lequel on utilise comme organe d'étranglement une soupape à membrane ou à pression.

6. Procédé selon l'une quelconque des revendications 1 à 5, **caractérisé en ce que** la pression entre l'organe de diminution de pression et l'organe d'étranglement est au maximum de 20 bars.

7. Procédé selon la revendication 1, dans lequel avant le mélange dans la chambre de mélange on dissout un générateur de germes de bulles dans le composant polyol et/ou le composant isocyanate.

8. Procédé selon la revendication 1, dans lequel on injecte un générateur de germes de bulles dans la chambre de mélange et on l'y met en solution.
